# EUROPÄISCHE PATENTSCHRIFT

(11) **EP 2 839 926 B1**
(45) Veröffentlichungstag und Bekanntmachung des Hinweises auf die Patenterteilung: **17.04.2019**
(21) Anmeldenummer: 14401065.9
(22) Anmeldetag: 27.05.2014
(51) Int. Cl.: B24B 3/36, B26D 7/12, C13B 5/08, B24B 3/58

(54) **Vorrichtung zum Schärfen von Schnitzelmessern**
Device for sharpening of slicing blades
Dispositif d'aiguisage de couteaux de coupe-racines

(30) Priorität: 26.06.2013 DE 102013106659
(43) Veröffentlichungstag der Anmeldung: 25.02.2015
(73) Patentinhaber: Putsch GmbH & Co. KG, 58095 Hagen (DE)
(72) Erfinder: Lodico, Michele, 58097 Hagen (DE); Lenz, Rüdiger, 58256 Ennepetal (DE)
(74) Vertreter: Köchling, Conrad-Joachim

(56) Entgegenhaltungen:
- DE-B- 1 264 932
- DE-B1- 2 459 983
- DE-C- 562 678

## Beschreibung

Die Erfindung betrifft ein Verfahren zum Betrieb einer Vorrichtung zum Schärfen von Schnitzelmessern für Erdfruchtschnitzelmaschinen gemäß dem Oberbegriff des Anspruches 1. Schnitzelmesser sind vielfach im Gebrauch, insbesondere zur Erzeugung von Rübenschnitzeln mit entsprechenden Schnitzelmaschinen. Solche Schnitzelmesser werden in vielfacher Form eingesetzt und werden aufgrund des bestimmungsgemäßen Gebrauchs häufig stumpf, sodass ein Nachschärfen der Messer erforderlich ist. Solche Messer bestehen aus einem Messerkörper, an dem einseitig satteldachförmige Schneidelemente ausgebildet sind, die in einer Vielzahl nebeneinander angeordnet sind. Zum Schärfen müssen die Schnitzelmesser jeweils an jeder Schneide der satteldachförmigen Schneidelemente nachgeschliffen werden. Dies ist ein erheblicher Arbeitsaufwand und dieser muss sehr sorgfältig ausgeführt werden, da zum einen die Positionierung der Schneide in den Schärfelementen sorgfältig durchgeführt werden muss und andererseits auch die Eingriffstiefe entsprechender Fräser in genauer Weise eingehalten werden muss, um das Messer nicht zu sehr zu beschneiden und eine scharfe Kante an dem Schneidelement zu erzeugen.

Herkömmliche Vorrichtungen dieser Art sind nur mit großem manuellem Aufwand zu bedienen, wobei durch die manuelle Bedienung auch vielfache Fehlerquellen beim Schärfen bestehen. Aus der DE 24 59 983 B1 ist eine Vorrichtung gattungsgemäßer Art bekannt. Desweiteren wird auf die DE 562 678 C zum Stand der Technik verwiesen. Ausgehend von diesem Stand der Technik liegt der Erfindung die Aufgabe zugrunde, ein Verfahren zum Betrieb einer Vorrichtung gattungsgemäßer Art zu schaffen, das in praktisch vollautomatischer Art und Weise die Schärfung von Schnitzelmessern ermöglicht, ohne dass es eines großen manuellen Aufwandes bedarf.

Die Lösung dieser Aufgabe ist im Anspruch 1 angegeben. Die Vorrichtung besteht im Wesentlichen aus einer in Richtung einer Y-Achse aufeinander zu und voneinander weg maschinell linear verstellbaren Zentriereinheit zum Zentrieren und Positionieren der Schnitzelmesser relativ zu einem Scheibenfräser, einer Bearbeitungseinheit mit einem maschinell drehbaren Scheibenfräser mit dachartiger Fräskante, mittels dessen die positionierten Schnitzelmesser an ihren Schneiden nacheinander geschärft werden können, wobei die Zentriereinheit und die Bearbeitungseinheit an einem Vorrichtungsgestell motorisch verstellbar gehalten sind. Des Weiteren ist eine Zange vorgesehen, die den Messerkörper eines Schnitzelmessers in einer Spannlage fixiert und die an einer gestellfesten Führung maschinell, das heißt vorzugsweise elektromotorisch, in einer X-Richtung verstellbar ist. In einer Ausgangslage sind die Zentriereinheit und die Bearbeitungseinheit voneinander weg verstellt, sodass die Positionierung des Schnitzelmessers mittels der Zange ermöglicht ist. Die Zange wird mit dem Schnitzelmesser in X-Richtung so weit verstellt, bis ein erstes satteldachartiges Schneidelement zur Fräskante des Scheibenfräsers korrekt ausgerichtet ist. Nachfolgend wird die Zentriereinheit mit einem Zentrierstück und/oder die Bearbeitungseinheit mit dem Scheibenfräser in eine Arbeitslage verstellt, in der die Zentriereinheit mit dem Zentrierstück auf den Rücken des satteldachartigen Schneidelementes aufgesetzt ist und die Bearbeitungseinheit mit der Fräskante des Scheibenfräsers in die Frontseite des satteldachartigen Schneidelementes eingreift. Während des Fräsvorganges wird der Scheibenfräser in Richtung der Zentriereinheit, also in Y-Richtung um ein vorbestimmtes Fräsmaß bewegt, sodass das entsprechende Schneidelement des Schnitzelmessers geschärft wird. Nach Durchführung des Fräsvorganges werden die Elemente in eine Endlage verstellt, in der wieder die Zentriereinheit und die Bearbeitungseinheit voneinander weg bewegt werden, und zwar in eine der Ausgangslage entsprechende Lage. Anschließend kann die Zange mit dem Schnitzelmesser um eine Teilung des Schnitzelmessers in X-Richtung verstellt werden, in welcher Lage ein auf das erste satteldachartige Schneidelement folgendes Schneidelement zum Zentrierelement und zum Scheibenfräser in Vorbereitung des nächsten Fräsvorganges ausgerichtet ist. Die weiteren Positionen erfolgen wiederum in der gleichen Abfolge, wie vorher angegeben ist. Diese Arbeitsweise erfolgt bis alle Schneidelemente bearbeitet sind. Anschließend kann das Schnitzelmesser aus der Zange entnommen werden und ein weiteres zu schärfendes Schnitzelmesser in die Zange eingesetzt werden, wobei die Vorrichtung in angegebener Weise bestimmungsgemäß betrieben wird, um auch dieses Messer zu schärfen.

Das Verfahren zum Betrieb der vorbeschriebenen Vorrichtung ist dadurch gekennzeichnet, dass in der Arbeitslage die Zentriereinheit mit dem Zentrierstück gegen den Rücken des zu bearbeitenden Schneidelementes verfahren wird bis ein Stromanstieg erfasst und dadurch der Vorschub der Zentriereinheit beendet wird, wobei der zurückgelegte Weg der Zentriereinheit über einen elektronischen Geber des Stellantriebes der Zentriereinheit an eine Steuerung übertragen wird, der erfasste Messwert mit einem in einem Speicher abgelegten Messwert der Nullposition des Scheibenfräsers verglichen wird und daraus der Stellwert zur Verstellung des Scheibenfräsers in Richtung auf die Frontseite des Schneidelementes abgeleitet wird und die Frästiefe des Scheibenfräsers bestimmt wird.

Durch die angegebene Betriebsweise mit der angegebenen Vorrichtung ist es in einfacher Weise möglich, ein Schnitzelmesser praktisch vollständig vollautomatisch zu schärfen, sodass Fehler durch manuelle Handhabung und dergleichen vermieden sind. Auch ist der Schärfvorgang hierdurch erheblich beschleunigt, sodass in relativ kurzen Zeiten komplette Schnitzelmesser geschärft werden können.

Eine bevorzugte Weiterbildung wird darin gesehen, dass die Vorrichtung mit einem elektronischen Prozessor ausgestattet ist, der den Speicher zur Speicherung von Sollwerten, einen Vergleicher zum Vergleichen von Sollwerten mit Istwerten, und die Steuerung zum Steuern der maschinellen, pneumatischen und/oder elektrischen Antriebsmittel zur Bewegung der Zentriereinheit, der Bearbeitungseinheit, des Scheibenfräsers und der Zange aufweist.

Sämtliche Elemente der Vorrichtung können durch eine elektronische Steuerung betätigt werden, wobei ein elektronischer Prozessor die Einstellung und Inbetriebnahme der entsprechenden Aggregate steuert. Der Prozessor hat einen Speicher zur Speicherung von Sollwerten über die Position und Eindringtiefe des Fräsers, sowie einen Vergleicher zum Vergleichen von Sollwerten mit Istwerten und eine Steuerung zum Steuern der maschinellen, pneumatischen und/oder elektrischen Antriebsmittel, mittels derer die Zentriereinheit, die Bearbeitungseinheit, der Scheibenfräser und die Zange bewegt werden und in Betrieb gesetzt werden.

Besonders bevorzugt ist dabei vorgesehen, dass das Zentrierstück der Zentriereinheit begrenzt aus einer federnd gelagerten Mittellage in eine gegen die Federkraft ausgelenkten Verstelllage in X-Richtung verstellbar ist, wobei zur Erfassung der Verstelllage ein elektrisches Messmittel angeordnet ist und mit einer elektronischen Steuerung und/oder einem elektronischen Speicher gekoppelt ist.

Durch diese Ausgestaltung ist es möglich, dass das Zentrierstück zunächst bei noch nicht exakt ausgerichtetem Schnitzelmesser auf den Rücken des dachartigen Schneidelementes aufgesetzt wird, wobei in Folge der nicht exakten Ausrichtung eine Auslenkung des Zentrierstückes aus der Mittellage in eine gegen die Kraft von Federn ausgelenkte Verstelllage in + oder - X-Richtung erfolgt. Diese von der Sollgröße abweichende Verstelllage wird mit einem elektrischen Messmittel gemessen und erfasst und die erfassten Daten werden von einer elektronischen Steuerung aufgenommen und/oder in einem elektronischen Speicher abgespeichert. Mittels dieser in der Steuerung abgelegten Daten kann dann eine Verstellung der Zange samt Schnitzelmesser in X-Richtung in die genaue Sollposition erfolgen, sodass nachfolgend der exakte Fräsvorgang durchgeführt werden kann, weil der Fräser dann exakt zu dem dachartigen Schneidelement ausgerichtet ist. In dieser Lage befindet sich das Zentrierstück in der Mittellage, die über die elektrischen Messmittel erfasst und als Solllage erkannt wird.

Zudem ist bevorzugt vorgesehen, dass das Zentrierstück der Zentriereinheit in einer Justagestellung unmittelbar auf die Fräskante des Scheibenfräsers aufgesetzt ist, eine mögliche Bewegung des Zentrierstückes aus der Mittellage in eine Verstelllage wegmäßig erfasst und die so ermittelte Position des Scheibenfräsers in dem elektronischen Speicher abgelegt wird, wobei diese Position damit die genaue Arbeitsposition des Scheibenfräsers ist und in dem Speicher und als Sollwert abgelegt ist.

Des Weiteren ist bevorzugt vorgesehen, dass das Zentrierstück in der Arbeitslage auf dem Rücken des satteldachartigen, zu bearbeitenden Schneidelementes aufsitzt, wobei eine mögliche Abweichung der Lage in X-Richtung von der Sollposition wegmäßig erfasst wird und über die elektronische Steuerung ein Stellsignal aus der Abweichung abgeleitet wird, mittels dessen der Zangenantrieb in X-Richtung eingeschaltet und die Zange in die Sollposition verstellt wird.

Zudem kann bevorzugt vorgesehen sein, dass zur wegmäßigen Erfassung zwischen dem Zentrierstück und in X-Richtung davon beabstandeten Teilen der Zentriereinheit induktive Wegaufnehmer als Messmittel angeordnet sind, die mit der elektronischen Steuerung gekoppelt sind, die das erfasste Signal verarbeitet und einen Stellbefehl für den Stellantrieb der Zange daraus ableitet.

Auch ist bevorzugt vorgesehen, dass die Zentriereinheit mittels des elektrischen Stellantriebs in Y-Richtung verstellbar ist, wobei der elektrische Stellantrieb mit einer Stromanstiegsschaltung gekoppelt ist, mittels derer der Stellantrieb bei Überschreiten einer Stromstärke abgeschaltet ist, wenn die Zentriereinheit gegen ein festes Hindernis insbesondere gegen den Scheibenfräser oder gegen den Rücken des satteldachartigen Schneidelementes angedrückt ist.

Ein Ausführungsbeispiel der Erfindung ist in der Zeichnung dargestellt und im Folgenden näher beschrieben.

Es zeigt:

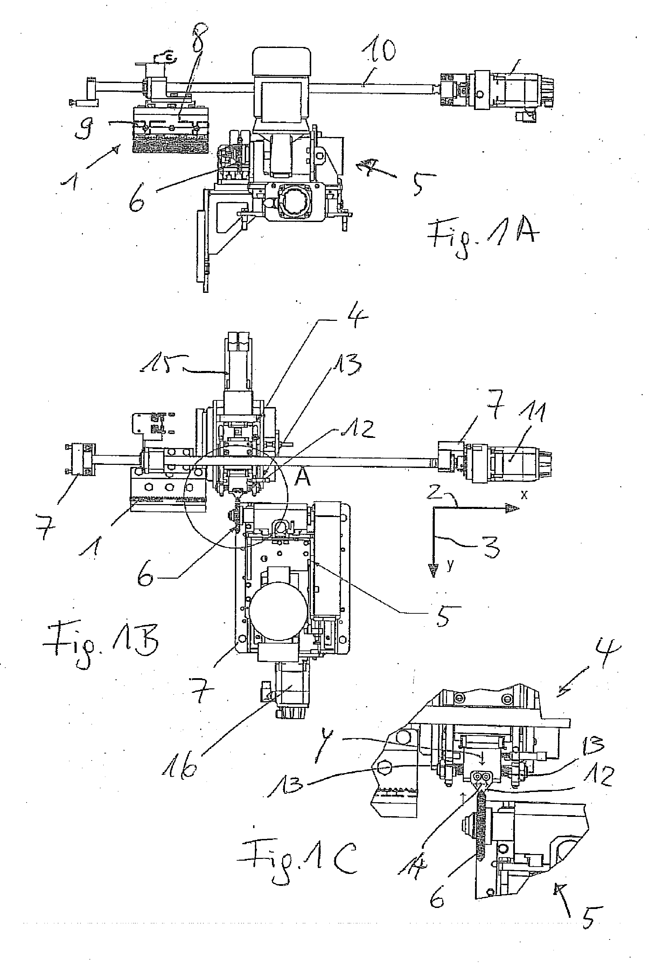

- Figur 1A-1C: zeigen wesentliche Vorrichtungsbestandteile in einem ersten Schritt des Arbeitsablaufes, Figur 1A in einer Seitenansicht, Figur 1B in einer Draufsicht, Figur 1C eine vergrößerte Einzelheit A der Figur 1B;

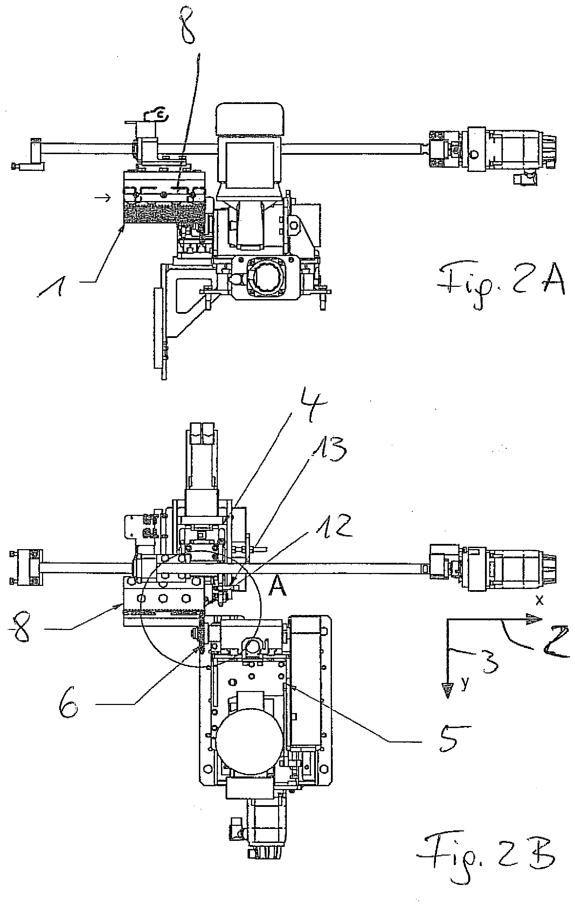

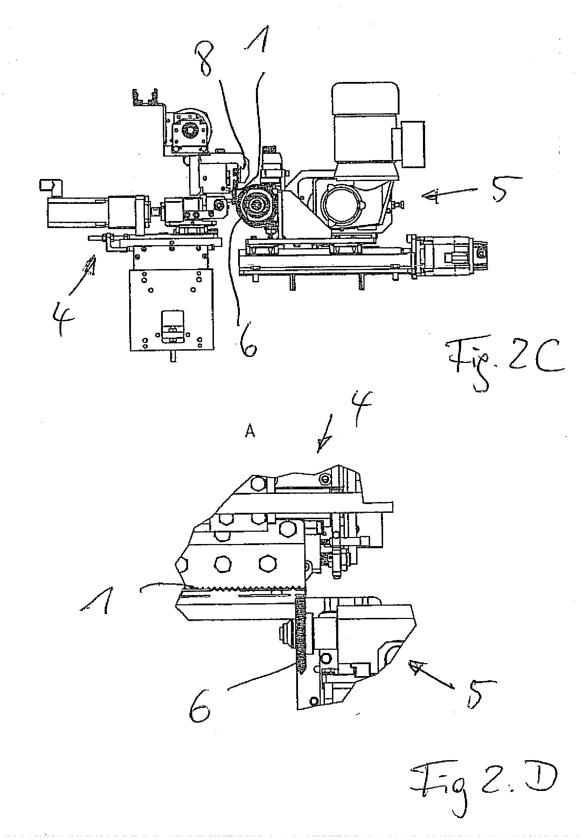

- Figur 2A-2D: einen zweiten Schritt des Arbeitsablaufes, wobei in Figur 2A die Vorrichtung wiederum in Seitenansicht, in Figur 2B in Draufsicht, in Figur 2C in einer Längsansicht und in Figur 2D eine Vergrößerung des Details A der Figur 2B gezeigt ist;

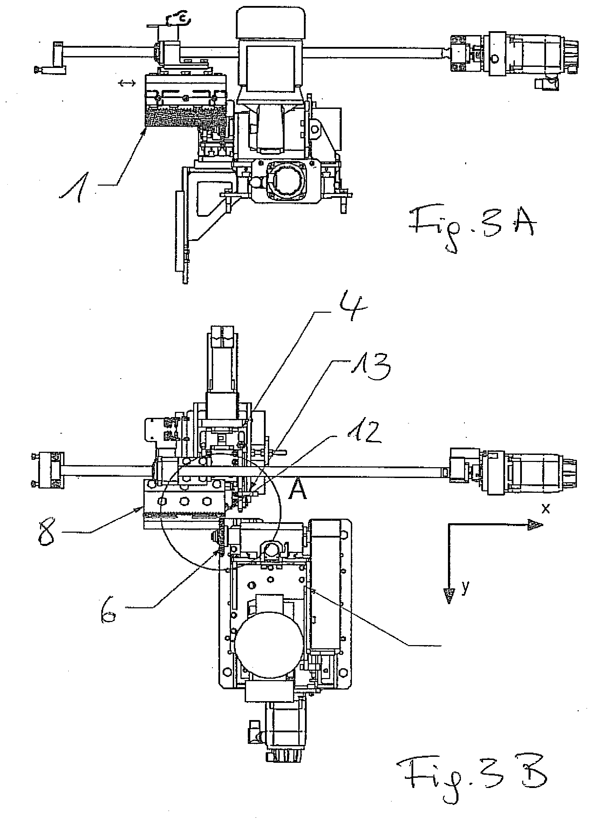

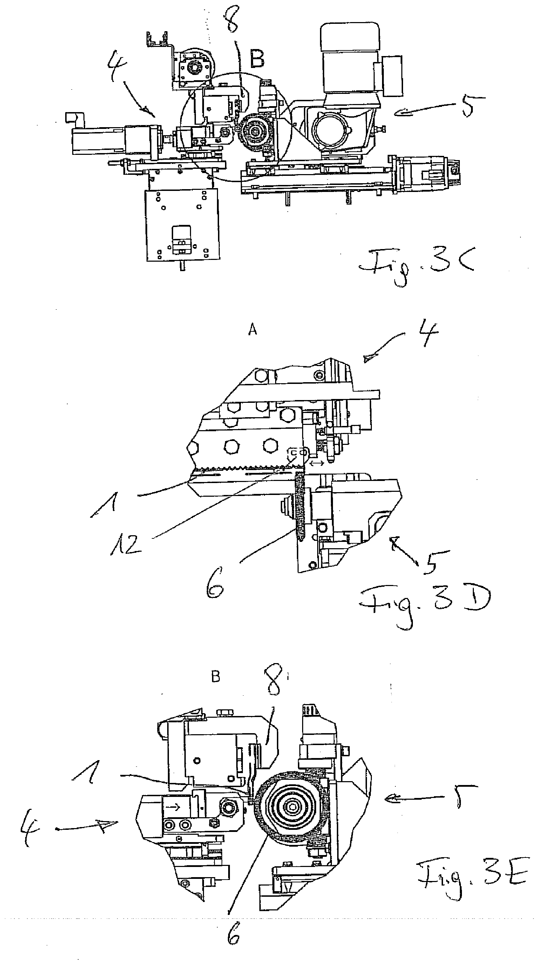

- Figur 3A-3E: zeigen einen dritten Schritt des Arbeitsablaufes, wobei in Figur 3A die Vorrichtung in Seitenansicht, in Figur 3B die Vorrichtung in Draufsicht, in Figur 3C die Vorrichtung in Längsrichtung gesehen ist, in Figur 3D die Einzelheit A der Figur 3B und in Figur 3E die Einzelheit B der Figur 3C in vergrößertem Maßstab gezeigt ist;

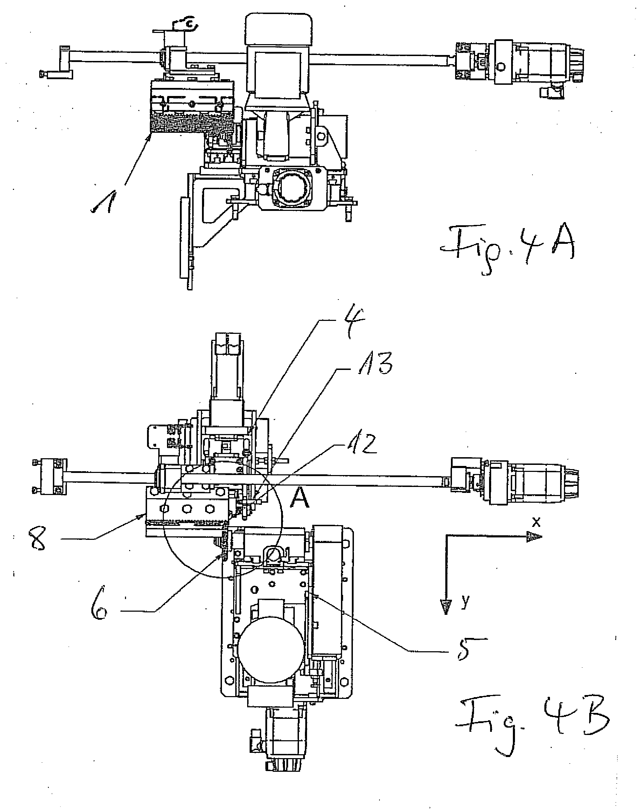

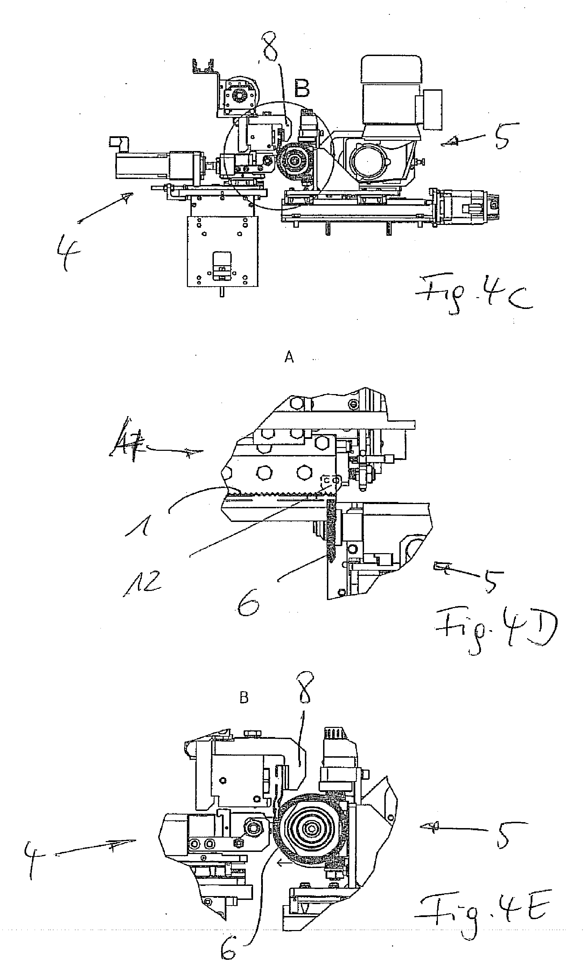

- Figur 4A-4E: zeigen einen vierten Schritt des Arbeitsablaufes, wobei die Vorrichtung in Figur 4A in Frontansicht, in Figur 4B in Draufsicht, in Figur 4C in Längsansicht gezeigt ist. In Figur 4D ist die Einzelheit A der Figur 4B und in Figur 4E die Einzelheit B der Figur 4C in vergrößertem Maßstab gezeigt;

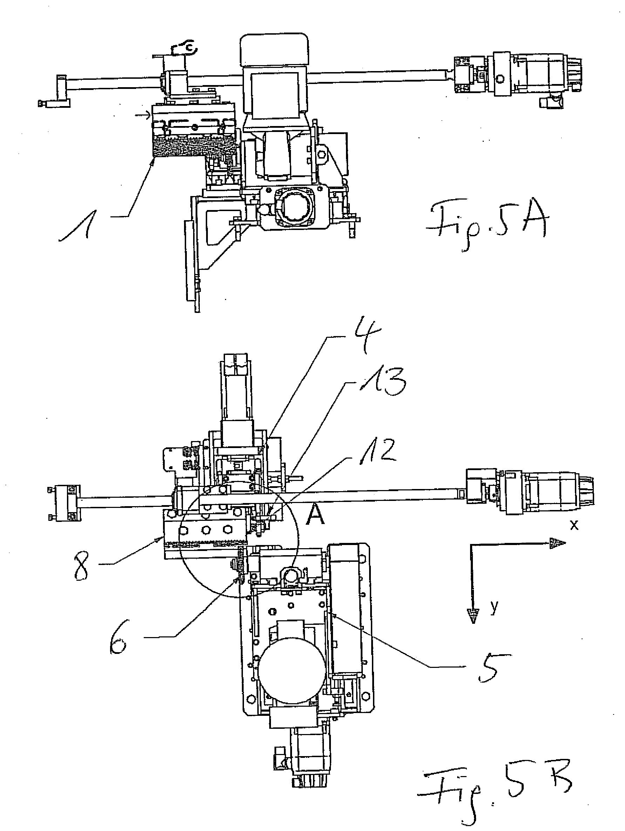

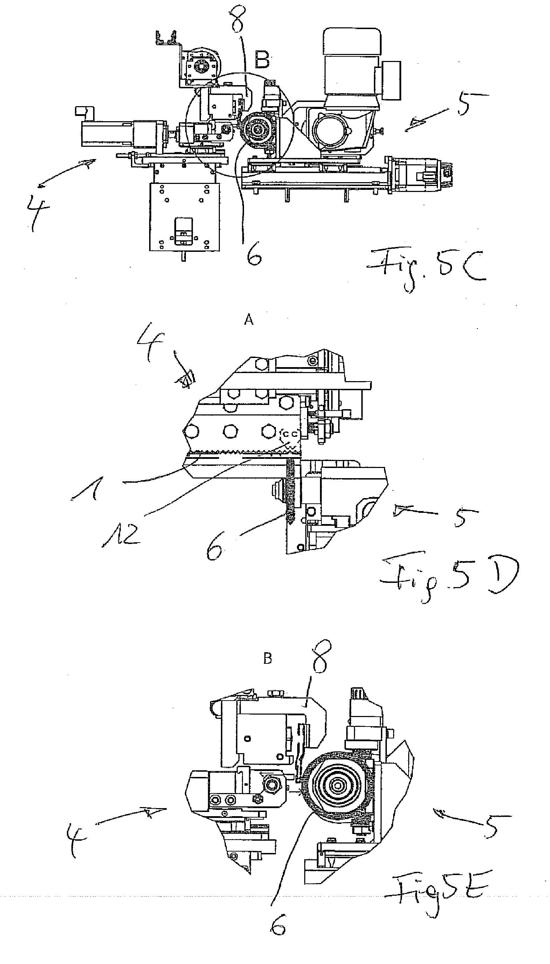

- Figur 5A-5E: zeigt einen fünften Schritt des Arbeitsablaufes, wobei in Figur 5A die Vorrichtung in Ansicht gezeigt ist, in Figur 5B die Vorrichtung in Draufsicht, in Figur 5C die Vorrichtung in Längsansicht gezeigt ist. In Figur 5D ist das Detail A der Figur 5B und in Figur 5E das Detail B der Figur 5C in vergrößertem Maßstab gezeigt.

In den Zeichnungen ist ein Schnitzelmesser 1 gezeigt, welches von einer Zange 8 gehalten ist, die den Messerkörper 9 spannt. Des Weiteren ist eine Zentriereinheit 4 angeordnet und eine Bearbeitungseinheit 5, die beide in Richtung des Pfeiles 3, also in Y-Richtung und in Gegenrichtung bewegbar sind. Des Weiteren ist ein Scheibenfräser 6 an der Bearbeitungseinheit 5 vorgesehen. Wesentliche gestellfeste Teile sind an einem nur andeutungsweise gezeichneten Vorrichtungsgestell 7 fixiert. Das Schnitzelmesser 1 weist eine Vielzahl von zueinander parallelen, in Y-Richtung 3 ausgerichteten satteldachartigen Schneidelementen auf, die über einen Teil der Breite des Schnitzelmessers 1 verlaufen, also in der Ansicht beispielsweise gemäß Figur 1A von oben nach unten und die an ihren in Figur 1A nach unten weisenden Enden die geschärften Schneidkanten bilden. Die Zange 8 ist an einer Führung 10 in Richtung des Pfeiles 2 in X-Richtung verstellbar, und zwar mittels eines Antriebselementes in Form eines Stellmotores 11.

Die Zentriereinheit 4 weist ein Zentrierstück 12 auf, welches quer zur Stellrichtung Y in Richtung des Bewegungspfeiles 14 federnd gelagert ist. Zwischen feststehenden Bestandteilen der Zentriereinheit 4 und dem beweglichen Zentrierstück 12 sind Messmittel 13 vorzugsweise in Form induktiver Wegaufnehmer angeordnet, mittels derer der Stellweg erfasst und elektronisch verarbeitet werden kann. Die Arbeitsweise der Vorrichtung ist wie folgt.

In Figur 1A-C ist eine Situation gezeigt, bei der die Nullposition des Fräsers 6 erfasst wird, die in der Datenverarbeitung der Vorrichtung als Sollwert abgelegt werden kann, um für weitere Bearbeitungen genutzt zu werden. Zur Erfassung der Nullposition verfährt die Bearbeitungseinheit 5 in negativer Y-Richtung 3 an eine vorbestimmte Position. Die Zentriereinheit 4 verfährt in positiver Y-Richtung mit dem Zentrierstück 12 gegen den stehenden Fräser 6. Der Weg, den das Zentrierstück 12 bis zum Kontakt mit dem Fräser 6 verfährt, wird über einen Geber des Stellmotores 15 an die elektronische Steuerung übermittelt. Die Verschiebung des quer zur Y-Richtung federnd gehaltenen Zentrierstückes 12 wird über das Messmittel 13, insbesondere einen induktiven Wegaufnehmer erfasst und als elektrisches Signal an die Steuerung übermittelt. Somit ist die genaue Position und auch der genaue Durchmesser des Fräsers 6 erkannt und in der Steuerung als Istwert abgelegt. Dies ist wichtig für die Erfassung des Verschleißes des Fräsers 6. Die Erfassung der Nullposition wird nach jedem Fräserwechsel und nach dem Ändern der Betriebsparameter der Zentriereinheit 4 durchgeführt.

In den Figuren 2A-2D ist eine Betriebssituation gezeigt, bei der die Zentriereinheit 4 und die Bearbeitungseinheit 5 voneinander weg verfahren sind, in eine Ausgangslage, sodass dann das mittels der Zange 8 festgespannte Schnitzelmesser 1 von dieser Zange 8 in die Bearbeitungsposition verfahren werden kann. Diese Position ist mit einer Toleranz von plus/minus 1,5 mm vorgegeben. Zum Bearbeiten wird aber eine Toleranz von plus/minus 0,05 mm erforderlich. Diese Position wird im Schritt drei erfasst, der in Figur 3A-3E erläutert ist. Hierbei verfährt die Zentriereinheit 4 in positiver Y-Richtung mit dem Zentrierstück 12 in die Kerbe des Schnitzelmessers 1. Die entsprechende Dachform des Zentrierstückes 12 ist beispielsweise in Figur 1C ersichtlich. Die satteldachartige Ausbildung des Schneidelementes des Schnitzelmessers 1 entspricht dieser Dachform.

Durch die miteinander in Eingriff gebrachten Formen des Zentrierstückes 12 und des Schnitzelmessers 1 verschiebt sich das Zentrierstück 12 bei Abweichung von der Sollposition in X-Richtung. Diese Verschiebung wird von dem Messmittel 13, also insbesondere dem induktiven Wegaufnehmer aufgenommen und als Steuersignal an die Steuerung übermittelt. In der Steuerung wird diese Position mit der Nullposition des Fräsers 6 verglichen. Bei Abweichung wird an den als Servoantrieb ausgebildeten Stellantrieb 11 der Zange 8 ein Stellsignal übertragen und durch den Stellantrieb wird dann die entsprechende Korrektur in X-Richtung vorgenommen, durch entsprechende genaue Verstellung der Zange 8. Somit wird das Schnitzelmesser 1 in X-Richtung an die exakte Bearbeitungsposition verfahren.

Die Zentriereinheit 4 verfährt das Zentrierstück 12 in die entsprechende Dachform des Schnitzelmessers 1, bis ein Stromanstieg von der elektronischen Steuerung erfasst wird und eine Stromabschaltung stattfindet. Sobald beim Vortrieb der Zentriereinheit 4 in Richtung des Pfeiles Y eine Position erreicht ist, an der der Strom zur Verstellung des Stellmotores 15 einen starken Stromanstieg erfasst, stoppt die Zentriereinheit 4. Der zurückgelegte Weg wird über einen Geber des Stellmotors 15 an die Steuerung übermittelt. Dieser wird mit der Nullposition des Fräsers 6 verglichen und dient der Bearbeitungseinheit 5 als Messwert für die Tiefe der Fräsung.

In Figur 4A bis 4E ist der Arbeitsschritt gezeigt, in welchem die Fräsung stattfindet. Die Tiefe der Fräsung wird in Abhängigkeit von der gewünschten Wandstärke des Schnitzelmessers und dem in Schritt 3 gemessenen Weg der Zentriereinheit 4 von der Steuerung erfasst und berechnet. Die Zentriereinheit 4 kann als Messerunterstützung in der Position am Schnitzelmesser 1 stehen bleiben. Diese Funktion kann aber auch wahlweise abgeschaltet werden, je nach Stabilität des Systems.

In Figur 5A-5E ist ein weiterer Arbeitsschritt gezeigt. Hierbei verfahren die Zentriereinheit 4 und die Bearbeitungseinheit 5 in die Grundstellung, also voneinander weg, und die Zange 8 verfährt mit dem Schnitzelmesser 1 um eine Teilung des Schnitzelmessers in positive X-Richtung weiter, sodass das nächste satteldachförmige Schneidelement zum Scheibenfräser 6 zumindest vorausgerichtet ist. Es erfolgt dann wieder die weitere Ausrichtung und Bearbeitung entsprechend den oben beschriebenen Schritten drei bis fünf. Dies erfolgt in zeitlicher Abfolge nacheinander, bis alle satteldachförmigen Schneidelemente des Schnitzelmessers 1 bearbeitet sind.

Nach der Bearbeitung wird das fertige Schnitzelmesser 1 mittels der Zange 8 an weitere Bearbeitungs- oder Ablagepositionen übergeben. Beispielsweise kann mit der gleichen Verfahrensweise eine Pfeilfräsung gefertigt werden.

In den Figuren 1A-1C ist eine Position verdeutlicht, in der mittels der Zange 8 das entsprechende Schnitzelmesser 1 in der Ausführungsform links neben der Zentriereinheit 4 und der Bearbeitungseinheit 5 angeordnet ist. Da bei dieser Arbeitsvorbereitung das Schnitzelmesser 1 nicht im Stellweg der Aggregate 4,5 angeordnet sein soll. Die Zentriereinheit 4 und die Bearbeitungseinheit 5 können dann einander angenähert werden, wie insbesondere aus Figur 1B und 1C ersichtlich ist, sodass der Scheibenfräser 6 in die Kerbe des Zentrierstückes 12 der Zentriereinheit 4 eingreift.

In Figur 2A-2D ist gezeigt, dass das Schnitzelmesser 1 sich in einer Arbeitsposition befindet. Hier wird das Schnitzelmesser 1 rückseitig von der Zentriereinheit 4, insbesondere dem Zentrierstück 12, zur Auffindung der entsprechenden Position beaufschlagt. Es erfolgt die Ausrichtung des entsprechenden Schärfbereiches des Schnitzelmessers 1 relativ zum Fräser 6. In Figur 3A-3E ist die weitere Justage und Ausrichtung des Schnitzelmessers 1 durch die Zentriereinheit 4, das Zentrierstück 12 und in Relation zum Scheibenfräser 6 gezeigt. Anschließend kann, wie in Figur 4A bis 4E gezeigt, der Scheibenfräser 6 in Betrieb gesetzt werden, um das entsprechende satteldachartige Schneidelement des Schnitzelmessers 1 zu schärfen. Der Fräsvorgang erfolgt bis zu der vorbestimmten Frästiefe. In Figur 4D ist dabei gezeigt, dass das Zentrierstück 12 noch rückseitig des satteldachartigen Schneidelementes des Schnitzelmessers 1 anliegt und in Figur 4E ist mit einem Bewegungspfeil die Bewegung des Scheibenfräsers 6 in Richtung zur Zentriereinheit 4 verdeutlicht.

In Figur 5A-5E ist gezeigt, dass die Zentriereinheit 4 und die Bearbeitungseinheit 5 wieder in die Ausgangslage zurückgestellt sind, sodass die Zange 8 mittels des Stellmotores 11 um eine Messerteilung weiter in X-Richtung verfahren werden kann, um dann das vorbeschriebene Prozedere wieder durchzuführen. In Figur 5D ist gezeigt, dass sowohl das Zentrierstück 12 als auch der Scheibenfräser 6 von dem entsprechenden satteldachartigen Schneidelement wegbewegt sind, sodass das Schnitzelmesser 1 von diesen Elementen freigeben ist. Die Bewegungspfeile sind in Figur 5E ersichtlich.

### Bezugszeichenliste:

- 1: Schnitzelmesser
- 2: X-Richtung
- 3: X-Richtung
- 4: Zentriereinheit
- 5: Bearbeitungseinheit
- 6: Scheibenfräser
- 7: Vorrichtungsgestell
- 8: Zange
- 9: Messerkörper
- 10: Führung von 8
- 11: Stellmotor von 8
- 12: Zentrierstück von 4
- 13: Messmittel (induktiver Wegaufnehmer)
- 14: Pfeil
- 15: Stellmotor von 4
- 16: Stellmotor von 5

## Patentansprüche

1. Verfahren zum Betrieb einer Vorrichtung zum Schärfen von Schnitzelmessern (1) für Erdfruchtschnitzelmaschinen, wobei die Schnitzelmesser (1) eine Schneide mit einer Vielzahl von nebeneinander an einem Messerkörper (9) ausgebildeten satteldachförmigen Schneidelementen aufweisen, bestehend aus einer in Richtung einer Y-Achse (3) aufeinander zu und voneinander weg maschinell linear verstellbaren Zentriereinheit (4) und einer Bearbeitungseinheit (5) mit einem maschinell drehbaren Scheibenfräser (6) mit dachartiger Fräskante, wobei die Zentriereinheit (4) und die Bearbeitungseinheit (5) an einem Vorrichtungsgestell (7) verstellbar gehalten sind, und einer Zange (8), die den Messerkörper (9) in einer Spannlage fixiert und die an einer gestellfesten Führung (10) maschinell in einer X-Richtung (2) verstellbar ist, wobei in einer Ausgangslage die Zentriereinheit (4) und die Bearbeitungseinheit (5) voneinander weg verstellt sind und die Zange (8) mit dem Schnitzelmesser (1) in X-Richtung (2) verstellt ist, in der ein erstes satteldachartiges Schneidelement zur Fräskante des Scheibenfräsers (6) ausgerichtet ist, in einer Arbeitslage die Zentriereinheit (4) mit einem Zentrierstück (12) auf den Rücken des satteldachartigen Schneidelementes aufgesetzt ist und die Bearbeitungseinheit (5) mit der Fräskante des Scheibenfräsers (6) in die Frontseite des satteldachartigen Schneidelementes eingreift und während des Fräsvorganges um ein Fräsmaß in Y-Richtung (3) bewegbar ist, und in einer Endlage die Zentriereinheit (4) und die Bearbeitungseinheit (5) in eine der Ausgangslage entsprechende Lage verstellt sind und die Zange (8) mit dem Schnitzelmesser (1) um eine Teilung des Schnitzelmessers (1) in X-Richtung (2) verstellt ist, in der ein auf das erste satteldachartige Schneidelement folgendes Schneidelement zum Zentrierstück (12) und zum Scheibenfräser (6) in Vorbereitung des nächsten Fräsvorganges ausgerichtet ist, wobei die weiteren Positionen gemäß der vorbezeichneten Abfolge aufeinander folgend eingestellt werden bis alle Schneidelemente bearbeitet sind, **dadurch gekennzeichnet, dass** in der Arbeitslage die Zentriereinheit (4) mit dem Zentrierstück (12) gegen den Rücken des zu bearbeitenden Schneidelementes verfahren wird bis ein Stromanstieg erfasst und dadurch der Vorschub der Zentriereinheit (4) beendet wird, wobei der zurückgelegte Weg der Zentriereinheit (4) über einen elektronischen Geber des Stellantriebes (15) der Zentriereinheit an eine Steuerung übertragen wird, der erfasste Messwert mit einem in einem Speicher abgelegten Messwert der Nullposition des Scheibenfräsers (6) verglichen wird und daraus der Stellwert zur Verstellung des Scheibenfräsers (6) in Richtung auf die Frontseite des Schneidelementes abgeleitet wird und die Frästiefe des Scheibenfräsers (6) bestimmt wird.

2. Verfahren zum Schärfen von Schnitzelmessern nach Anspruch 1, **dadurch gekennzeichnet, dass** die Vorrichtung mit einem elektronischen Prozessor ausgestattet ist, der den Speicher zur Speicherung von Sollwerten, einen Vergleicher zum Vergleichen von Sollwerten mit Istwerten, und die Steuerung zum Steuern der maschinellen, pneumatischen und/oder elektrischen Antriebsmittel zur Bewegung der Zentriereinheit (4), der Bearbeitungseinheit (5), des Scheibenfräsers (6) und der Zange (8) aufweist.

3. Verfahren nach Anspruch 1 oder 2, **dadurch gekennzeichnet, dass** das Zentrierstück (12) der Zentriereinheit (4) begrenzt aus einer federnd gelagerten Mittellage in eine gegen die Federkraft ausgelenkten Verstelllage in X-Richtung (2) verstellbar ist, wobei zur Erfassung der Verstelllage ein elektrisches Messmittel (13) angeordnet ist und mit einer elektronischen Steuerung und/oder einem elektronischen Speicher gekoppelt ist.

4. Verfahren nach Anspruch 3, **dadurch gekennzeichnet, dass** das Zentrierstück (12) der Zentriereinheit (4) in einer Justagestellung unmittelbar auf die Fräskante des Scheibenfräsers (6) aufgesetzt ist, eine mögliche Bewegung des Zentrierstückes (12) aus der Mittellage in eine Verstelllage wegmäßig erfasst und die so ermittelte Position des Scheibenfräsers (6) in dem elektronischen Speicher abgelegt wird, wobei diese Position damit die genaue Arbeitsposition des Scheibenfräsers (6) ist und in dem Speicher und als Sollwert abgelegt ist.

5. Verfahren nach Anspruch 3 oder 4, **dadurch gekennzeichnet, dass** das Zentrierstück (12) in der Arbeitslage auf dem Rücken des satteldachartigen, zu bearbeitenden Schneidelementes aufsitzt, wobei eine mögliche Abweichung der Lage in X-Richtung (2) von der Sollposition wegmäßig erfasst wird und über die elektronische Steuerung ein Stellsignal aus der Abweichung abgeleitet wird, mittels dessen der Zangenantrieb (11) in X-Richtung (2) eingeschaltet und die Zange (8) in die Sollposition verstellt wird.

6. Verfahren nach Anspruch 4 oder 5, **dadurch gekennzeichnet, dass** zur wegmäßigen Erfassung zwischen dem Zentrierstück (4) und in X-Richtung (2) davon beabstandeten Teilen der Zentriereineinheit (4) induktive Wegaufnehmer als Messmittel (13) angeordnet sind, die mit der elektronischen Steuerung gekoppelt sind, die das erfasste Signal verarbeitet und einen Stellbefehl für den Stellantrieb (11) der Zange (8) daraus ableitet.

7. Verfahren nach einem der Ansprüche 1 bis 6, **dadurch gekennzeichnet, dass** die Zentriereinheit (4) mittels des elektrischen Stellantriebs (15) in Y-Richtung (3) verstellbar ist, wobei der elektrische Stellantrieb (15) mit einer Stromanstiegsschaltung gekoppelt ist, mittels derer der Stellantrieb (15) bei Überschreiten einer Stromstärke abgeschaltet wird, wenn die Zentriereinheit (4) gegen ein festes Hindernis insbesondere gegen den Scheibenfräser (6) oder gegen den Rücken des satteldachartigen Schneidelementes angedrückt ist.

## Claims

1. A method for operating a device for sharpening cutting knives (1) for slicing machines for root vegetables, the cutting knives (1) having a blade with a plurality of gable roof-shaped cutting elements formed side-by-side at a knife body (9), consisting of a centering unit (4) and a processing unit (5) linearly adjustable by machine towards and away from each other in the direction of a Y axis (3), with a side-milling cutter (6) rotatable by machine with a roof-type cutting edge, the centering unit (4) and the processing unit (5) being adjustably held at a device rack (7), and a pair of pliers (8) fixing the knife body (9) in a clamped position and being adjustable by machine in an X direction (2) at a guide contour (10) being fixed in the rack, in an initial position the centering unit (4) and the processing unit (5) being spaced apart from each other and the pair of pliers (8) with the cutting knives (1) being displaced in the X direction (2), in which a first gable roof-shaped cutting element is aligned toward the cutting edge of the side-milling cutter (6), in a working position the centering unit (4) with a centering piece (12) being placed on the back side of the gable roof-shaped cutting element, and the processing unit (5) engaging, with the cutting edge of the side-milling cutter (6), into the front side of the gable roof-shaped cutting element and being movable during the cutting process by a cutting dimension in the Y direction (3), and in an end position the centering unit (4) and the processing unit (5) being displaced into a position corresponding to the initial position, and the pair of pliers (8) with the cutting knives (1) being displaced by a pitch of the cutting knife (1) in the X direction (2), in which a cutting element following the first gable roof-shaped cutting element is aligned toward the centering piece (12) and toward the side-milling cutter (6) in preparation of the next cutting process, the further positions according to the above-mentioned sequence being successively adjusted, until all cutting elements are processed, **characterized by that** in the working position, the centering unit (4) with the centering piece (12) is moved against the back side of the cutting element to be processed, until an increase in current is detected and thereby the advance of the centering unit (4) is terminated, the travel made by the centering unit (4) is transmitted, through an electronic transducer of the actuator (15) of the centering unit, to a controller, the detected measurement value is compared to a measurement value stored in a memory of the zero position of the side-milling cutter (6) and therefrom the value for adjustment of the side-milling cutter (6) in the direction toward the front side of the cutting element is derived, and the cutting depth of the side-milling cutter (6) is determined.

2. The method for sharpening cutting knives of claim 1, **characterized by that** the device is provided with an electronic processor including the memory for storing intended values, a comparator for comparing the intended values to actual values, and the controller for controlling the machine, pneumatic and/or electric drive means for moving the centering unit (4), the processing unit (5), the side-milling cutter (6), and the pair of pliers (8).

3. The method of claim 1 or 2, **characterized by that** the centering piece (12) of the centering unit (4) is limitedly adjustable from a resiliently supported central position into a position adjusted against the spring force in the X direction (2), for the detection of the adjusted position an electric measurement means (13) being disposed and coupled to an electronic controller and/or an electronic memory.

4. The method of claim 3, **characterized by that** the centering piece (12) of the centering unit (4), in an adjustment position, is placed immediately on the cutting edge of the side-milling cutter (6), a potential movement of the centering piece (12) from the central position to an adjusted position is detected by the travel made, and the thus determined position of the side-milling cutter (6) is stored in the electronic memory, this position, thus, being the accurate working position of the side-milling cutter (6) and being stored in the memory as an intended value.

5. The method of claim 3 or 4, **characterized by that** the centering piece (12), in the working position, sits on the back side of the gable roof-shaped cutting element to be processed, a potential deviation of the position in the X direction (2) of the intended position being detected by the travel made, and via the electronic controller an adjustment signal being derived from the deviation, by means of which the drive (11) of the pair of pliers in the X direction (2) is activated, and the pair of pliers (8) is adjusted into the intended position.

6. The method of claim 4 or 5, **characterized by that** for the detection of the travel made between the centering piece (4) and parts of the centering unit (4) spaced thereto in the X direction (2), inductive travel transducers are arranged as measurement means (13) that are coupled to the electronic controller that processes the detected signal and derives therefrom an adjustment command for the actuator (11) of the pair of pliers (8).

7. The method of one of claims 1 to 6, **characterized by that** the centering unit (4) is adjustable by means of the electric actuator (15) in the Y direction (3), the electric actuator (15) being coupled to a circuitry of increase in current, by means of which the actuator (15) is turned off, when a current is exceeded, when the centering unit (4) is pressed against a solid obstacle, in particular against the side-milling cutter (6) or against the back side of the gable roof-shaped cutting element.

## Revendications

1. Procédé de fonctionnement d'un dispositif pour l'affûtage de couteaux à découper (1) pour coupes-racines pour des fruits de terre, les couteaux à découper (1) ayant un tranchant avec une pluralité d'éléments de découpage en forme de toit en double inclinaison formés l'un à côté de l'autre à un corps de couteau (9), consistant en une unité de centrage (4) et une unité de traitement (5) linéairement ajustables par machine à rapprochement et éloignement alternatif l'une par rapport à l'autre dans la direction d'un axe Y (3), avec une fraise à disque (6) rotative par machine avec une arête de fraisage de type toit, l'unité de centrage (4) et l'unité de traitement (5) étant ajustablement retenues à un dispositif bâti (7), et une pince (8) fixant le corps de couteau (9) dans une position de serrage et étant ajustable par machine dans une direction X (2) à un guidage (10) étant fixe dans le bâti, dans une position initiale, l'unité de centrage (4) et l'unité de traitement (5) étant espacées l'une de l'autre et la pince (8) avec les couteaux à découper (1) étant déplacée dans la direction X (2), dans laquelle un premier élément de découpage en forme de toit en double inclinaison est aligné vers l'arête de fraisage de la fraise à disque (6), dans une position de travail, l'unité de centrage (4) avec une pièce de centrage (12) étant mise en place sur le côté arrière de l'élément de découpage en forme de toit en double inclinaison, et l'unité de traitement (5) s'engageant, avec l'arête de fraisage de la fraise à disque (6), dans le côté avant de l'élément de découpage en forme de toit en double inclinaison et étant déplaçable pendant le procédé de découpage par une dimension de découpage dans la direction Y (3), et dans une position d'extrémité, l'unité de centrage (4) et l'unité de traitement (5) étant déplacées dans une position correspondant à la position initiale, et la pince (8) avec les couteaux à découper (1) étant déplacée par un pas du couteau à découper (1) dans la direction X (2), dans laquelle un élément de découpage suivant le premier élément de découpage en forme de toit en double inclinaison est aligné vers la pièce de centrage (12) et vers la fraise à disque (6) en préparation du prochain procédé de découpage, les autres positions selon la séquence mentionnée ci-dessus étant successivement ajustées, jusqu'à-ce que tous les éléments de découpage soient traités, **caractérisé en ce que** dans la position de travail, l'unité de centrage (4) avec la pièce de centrage (12) est déplacée contre le côté arrière de l'élément de découpage à être traité, jusqu'à-ce qu'une augmentation du courant soit détectée et par cela l'avancement de l'unité de centrage (4) soit terminé, la course accomplie par l'unité de centrage (4) est transmise, par un capteur électronique de l'actionneur (15) de l'unité de centrage, à un dispositif de commande, la valeur mesurée détectée est comparée à une valeur mesurée emmagasinée dans une mémoire de la position zéro de la fraise à disque (6) et donc la valeur pour ajustage de la fraise à disque (6) dans la direction vers le côté avant de l'élément de découpage est dérivée, et la profondeur de découpage de la fraise à disque (6) est déterminée.

2. Procédé pour l'affûtage de couteaux à découper selon la revendication 1, **caractérisé en ce que** le dispositif est pourvu d'un processeur électronique comportant la mémoire pour emmagasiner des valeurs de consigne, un comparateur pour comparer des valeurs de consigne à des valeurs actuelles, et le dispositif de commande pour commander les moyens d'entraînement par machine, pneumatiques et/ou électriques pour déplacer l'unité de centrage (4), l'unité de traitement (5), la fraise à disque (6), et la pince (8).

3. Procédé selon la revendication 1 ou 2, **caractérisé en ce que** la pièce de centrage (12) de l'unité de centrage (4) est ajustable de manière limitée à partir d'une position centrale élastiquement portée dans une position ajustée contre la force de ressort dans la direction X (2), pour la détection de la position ajustée un moyen de mesurage (13) électrique étant disposé et accouplé à un dispositif de commande électronique et/ou une mémoire électronique.

4. Procédé selon la revendication 3, **caractérisé en ce que** la pièce de centrage (12) de l'unité de centrage (4), dans une position d'ajustage, est mise en place immédiatement sur l'arête de fraisage de la fraise à disque (6), un déplacement potentiel de la pièce de centrage (12) à partir de la position centrale à une position ajustée est détecté par la course accomplie, et la position ainsi déterminée de la fraise à disque (6) est emmagasinée dans la mémoire électronique, cette position, donc, étant la position de travail précise de la fraise à disque (6) et étant emmagasinée dans la mémoire comme valeur de consigne.

5. Procédé selon la revendication 3 ou 4, **caractérisé en ce que** la pièce de centrage (12), dans la position de travail, se trouve sur le côté arrière de l'élément de découpage en forme de toit en double inclinaison à être traité, un écart potentiel de la position dans la direction X (2) de la position de consigne étant détecté par la course accomplie, et par l'intermédiaire du dispositif de commande électronique un signal d'ajustage étant dérivé de l'écart, au moyen duquel l'entraînement (11) de la pince dans la direction X (2) est activé, et la pince (8) est ajustée dans la position de consigne.

6. Procédé selon la revendication 4 ou 5, **caractérisé en ce que** pour la détection de la course accomplie entre la pièce de centrage (4) et des parties de l'unité de centrage (4) espacées de celle-ci dans la direction X (2), des capteurs de course inductifs sont prévus comme des moyens de mesurage (13) qui sont accouplés au dispositif de commande électronique qui traite le signal détecté et dérive une commande d'ajustage pour l'actionneur (11) de la pince (8).

7. Procédé selon une des revendications 1 à 6, **caractérisé en ce que** l'unité de centrage (4) est ajustable au moyen de l'actionneur électrique (15) dans la direction Y (3), l'actionneur électrique (15) étant accouplé à un circuit d'augmentation de courant, au moyen duquel l'actionneur (15) est déconnecté, si un courant est dépassé quand l'unité de centrage (4) est pressée contre un obstacle solide, en particulier contre la fraise à disque (6) ou contre le côté arrière de l'élément de découpage en forme de toit en double inclinaison.
